# EUROPEAN PATENT APPLICATION

(11) **EP 2 782 101 A1**
(43) Date of publication of application: **24.09.2014**
(21) Application number: 12850313.3
(22) Date of filing: 14.11.2012
(51) Int. Cl.: G21C 17/00, G01F 23/00, G01F 23/18

(54) **REACTOR WATER LEVEL MEASUREMENT SYSTEM**

(30) Priority: 18.11.2011 JP 2011253143
(71) Applicant: Kabushiki Kaisha Toshiba, Minato-ku Tokyo 105-8001 (JP)
(72) Inventor: MATSUO, Yuka, Tokyo 105-8001 (JP); SHIRAISHI, Fujio, Tokyo 105-8001 (JP); GOTO, Yasushi, Tokyo 105-8001 (JP); ITO, Toshiaki, Tokyo 105-8001 (JP)
(74) Representative: HOFFMANN EITLE
(86) International application number: PCT/JP2012/007296
(87) International publication number: WO 2013/073178

(57) **Abstract**

The reactor water level measurement system comprises: a condensation tank (11) connected with the steam region of the pressure vessel (2); a reference pipe (21) whereof one end is connected with the condensation tank (11); fluctuation pipes (22) to (24) whereof one end is connected with the pressure vessel (2); pressure difference measurement type water gauges (31) to (34) that detect the water head difference of the reference pipe (21) and the fluctuation pipes (22) to (24) and that are connected with the other ends of the reference pipe (21) and the fluctuation pipes (22) to (24); non-pressure difference water gauges (35), (36) that detect the water level of the pressure vessel 2; and a computation device (20) that selects a pressure difference type water gauge (31) to (34) or a non-pressure difference type water gauge (35), (36), in accordance with the condition of the containment vessel (4) or of the pressure vessel (2) and that indicates/records the water level of the pressure vessel based on the detection result of the selected water gauge.

## Description

### FIELD

An embodiment of the present invention relates to a reactor water level measurement system for measuring water level in a reactor.

### BACKGROUND

A reactor is provided with a plurality of water gauges having different measurement ranges calibrated in accordance with the application. Conventionally, techniques for measuring water level are known using pressure difference, or a water level measurement device employing a gamma thermometer, as disclosed in Patent Reference 1. An example of such a technique is disclosed in laid-open Japanese Patent Publication Number Tokkai H. 10-39083 (hereinafter referred to as Patent Reference 1).

Such water gauges are arranged in such a way that their measurement ranges overlap. However, due to differences in calibration conditions, sometimes, depending on plant conditions, a plurality of water gauges may give different water level indications. In this connection, when there is a large change in the condition of the plant due for example to a transient condition or accident, the operator must be able to read the water level while being aware of the applicability of each type of water gauge.

Also, although water gauges are designed so as to be capable of measurement as far as the bottom-end level of the fuel active range in view of the possibility of accidents, in the case of severe accidents, there is a risk that the water level may drop to a point that cannot be measured because it was not envisioned in the design of conventional water gauges.

Furthermore, while a fuel zone water gauge is employed to confirm core flooding, if the temperature in the reactor containment vessel rises beyond the design conditions of the water gauge, there is a risk that measurement by the fuel zone water gauge may become impossible.

The present invention was made in view of these circumstances, its object being to provide a reactor water level measurement system capable of measurement of water level throughout the entire reactor pressure vessel.

In order to solve the above problems, a reactor water level measurement system according to the present invention is characterized in that it comprises:
a condensation tank connected with the steam region of the reactor pressure vessel contained in the reactor containment vessel;
a reference water column instrumentation pipe whereof one end is connected with said condensation tank;
a first fluctuating water column instrumentation pipe whereof one end is connected with said reactor pressure vessel;
a pressure difference measurement type first water gauge that detects the water head difference of said reference water column instrumentation pipe and said first fluctuating water column instrumentation pipe and that is connected with the other ends of said reference water column instrumentation pipe and said first fluctuating water column instrumentation pipe;
a second water gauge having a different construction from said first water gauge and that detects the water level of said reactor pressure vessel;
a computation device that selects said first water gauge or said second water gauge in accordance with the condition of said reactor containment vessel or said reactor pressure vessel and that indicates/records the water level of said reactor pressure vessel based on the detection result of the selected water gauge.
With a reactor water level measurement system according to the present invention, the water level can be measured throughout the reactor pressure vessel.

### BRIEF DESCRIPTION OF THE DRAWINGS

FIG. 1 is a layout diagram showing a first embodiment of a reactor water level measurement system according to the present invention;
FIG. 2 is a flowchart given in explanation of selection processing in the event of a drop in reactor pressure;
FIG. 3 is a flowchart given in explanation of selection processing in the event of a drop in reactor water level;
FIG. 4 is a flowchart given in explanation of selection processing in the event of a drop in water level below TAF;
FIG. 5 is a layout diagram showing a second embodiment of a reactor water level measurement system according to the present invention;
FIG. 6 is a layout diagram showing a water level measurement system constituting a first modification of the water level measurement system of the second embodiment;
FIG. 7 is a layout diagram showing a water level measurement system constituting a second modification of the water level measurement system of the second embodiment;
FIG. 8 is a layout diagram showing a water level measurement system constituting a first modification of the water level measurement system of the first embodiment; and
FIG. 9 is a layout diagram showing a water level measurement system constituting a second modification of the water level measurement system of the first embodiment.

### DETAILED DESCRIPTION

Embodiments of a reactor water level measurement system according to the present invention are described below with reference to the appended drawings. In these embodiments, a reactor water level measurement system according to the present invention is applied to a boiling water reactor. However, the reactor water level measurement system according to the present invention could of course be applied for example to a pressurized water reactor.

### [First embodiment]

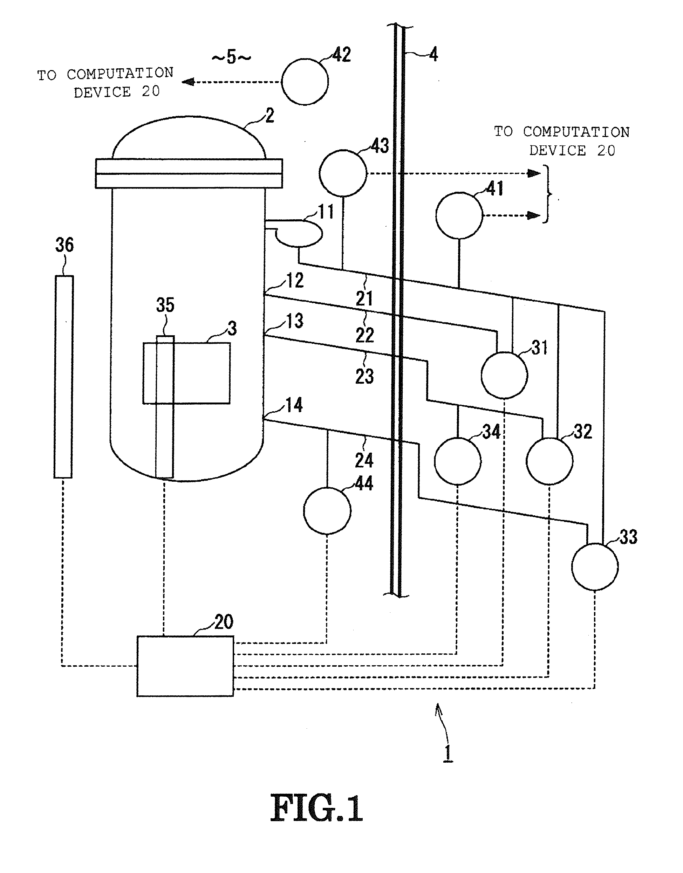

FIG. 1 is a layout diagram showing a first embodiment of a reactor water level measurement system according to the present invention.

A reactor pressure vessel (pressure vessel) 2 that is the subject of measurement by the reactor water level measurement system (water level measurement system) 1 accommodates a core 3. Also, the pressure vessel 2 is contained in a reactor containment vessel (containment vessel) 4. A condensation tank 11 and detection taps 12 to 14 are provided at the side face of the pressure vessel 2.

The condensation tank 11 is provided within the containment vessel 4 and is connected with the steam region of the pressure vessel 2. The condensation tank 11 provides a reference water head during water level detection by connection with a reference water column instrumentation pipe (reference pipe) 21 at the bottom thereof. Detection taps 12 to 14 are respectively provided at prescribed positions of the pressure vessel 2 in accordance with the measurement ranges of pressure difference type water gauges 31 to 34. One end in each case of fluctuating water column instrumentation pipes (fluctuation pipes) 22 to 24 constituting first fluctuating water column instrumentation pipes are connected through these detection taps 12 to 14 with the pressure vessel 2. The reference pipe 21 and fluctuation pipes 22 to 24 extend to outside the containment vessel 4 and their other ends are respectively connected with pressure difference type water gauges 31 to 34 outside the containment vessel 4.

The pressure difference type water gauges 31 to 34 are: a narrow-zone reactor water gauge 31, a wide-zone reactor water gauge 32, a fuel zone reactor water gauge 33 and a reactor water gauge 34 for water-filling on regular inspection. The pressure difference type water gauges 31 to 34 detect the water head differences of the reference pipe 21 and the fluctuation pipes 22 to 24.

The narrow-zone reactor water gauge (narrow-zone water gauge) 31 measures the water level in a range where the water level fluctuation is predicted to be narrow i.e. in conditions including the ordinary operating condition and transient conditions. The wide-zone reactor water gauge (wide-zone water gauge) 32 measures the water level in a range where the water level fluctuation is predicted to be wider than the measurement range of the narrow-zone water gauge 31 i.e. in conditions including abnormal transient change or in the event of an accident. The fuel zone reactor water gauge (fuel zone water gauge) 33 measures water levels lower than the measurement range of the wide-zone water gauge 32 in conditions including the aftermath of an accident, and is employed for example to confirm core flooding. The reactor water gauge 34 for water-filling on regular inspection (water gauge for water filling on regular inspection) measures the water level from the fuel top, which is assumed to be the water level during regular inspection of the atomic power plant, to the reactor well.

Since the reactor pressure and temperature are different depending on the operating condition of the reactor, the specific volume of the water head water etc fluctuates. In order to measure the water level accurately, it is therefore necessary to correct this specific volume. To achieve this, the pressure difference type water gauges 31 to 34 are calibrated in accordance with the condition of the reactor. For example, the calibration conditions employed for the narrow-zone water gauge 31 and the wide-zone water gauge 32 are the temperature and pressure under rated operation. The fuel zone water gauge 33 and the reactor water gauge 34 for water filling on regular inspection are calibrated at atmospheric pressure.

A reactor-internal non-pressure difference type water gauge 35 is provided in the pressure vessel 2. The reactor-internal non-pressure difference type water gauge 35 is a second type of water gauge employing a different construction and principle of operation to that of the pressure difference type water gauges 31 to 34: for example, it may be a gamma thermometer that detects the water level using a temperature difference produced by gamma rays. The gamma thermometer is capable not merely of detecting water level using gamma rays but also of detecting water level from the temperature difference produced by the presence/absence of water, using as heat source a heater provided in the gamma thermometer. Consequently, water level detection can be performed using the heater as heat source, even when no gamma heating effect produced by gamma rays can be expected, such as in the case of a breakdown. The reactor-internal non-pressure difference type water gauge 35 is provided within the core shroud that encloses the core 3, or outside this core shroud.

The reactor-external non-pressure difference type water gauge 36 is provided within the containment vessel 4 and outside the pressure vessel 2. This reactor-external non-pressure difference type water gauge 36 is constituted by a second type of water gauge having a construction different from that of the pressure difference type water gauges 31 to 34 and may be for example a water gauge that detects the water level using gamma rays, neutrons, or ultrasound.

The reactor-internal non-pressure difference type water gauge 35 and reactor-external non-pressure difference type water gauge 36 (non-pressure difference type water gauges 35, 36) are capable of measuring the water level in a range overlapping the water level measurement range of the pressure difference type water gauges 31 to 34 and can perform detection down to a water level at the bottom of the pressure vessel 2, i.e. a water level lower than the range that can be measured by the fuel zone water gauge 33 and lower than the bottom end of the active length of the fuel. Preferably a plurality of non-pressure difference type water gauges 35, 36 are provided in multiple zones inside and outside the pressure vessel 2 and these can measure water levels at a plurality of detection points distributed in the vertical direction. Although, if the core 3 is damaged, there is a risk that the water gauges will also be damaged, by providing a plurality of detection points, it is possible to confirm that reactor water is contained, by means of water gauges whose outputs are unaffected.

Various types of measurement equipment are provided within the containment vessel 4 in order to detect the process condition of the pressure vessel 2. For example, a reactor pressure meter (pressure meter) 41 is connected with the reference pipe 21 outside the containment vessel 4 and measures the pressure of the pressure vessel 2. A first thermometer 42 is provided within a drywell 5 in the containment vessel 4 and detects the atmosphere temperature of the drywell 5. A second thermometer 43 is provided at the surface of the reference pipe 21 in the vicinity of the condensation tank 11 within the containment vessel 4 and measures the surface temperature of the reference pipe 21 in the vicinity of the condensation tank 11. A third thermometer 44 is provided at the surface of the fluctuation pipe 24 that is connected with the fuel zone water gauge 33 within the containment vessel 4 and measures the surface temperature of the fluctuation pipe 24.

These pressure difference type water gauges 31 to 34, non-pressure difference type water gauges 33, 36, pressure meter 41, and thermometers 42 to 44 are connected with the computation device 20, so that the detection results obtained therefrom are output to the computation device 20. The computation device 20 indicates and records for example the water level, pressure and temperature from the detection results transmitted from the various items of measurement equipment. The computation device 20 is connected with a display device and input device. The acquired indicated values are thus displayed on the display device of the computation device 20 or input to the computation device 20 through an input device.

The computation device 20 detects the condition of the containment vessel 4 or pressure vessel 2, and, based on the detected condition, selects a water gauge to be used in indicating/recording the water level from among the pressure difference type water gauges 31 to 34 and non-pressure difference type water gauges 35, 36. The selection processing whereby the computation device 20 selects a water gauge, when the reactor pressure drops, when the reactor water level drops, or when the water level falls below the top end of the active length of the fuel (TAF = top of active fuel) is described below.

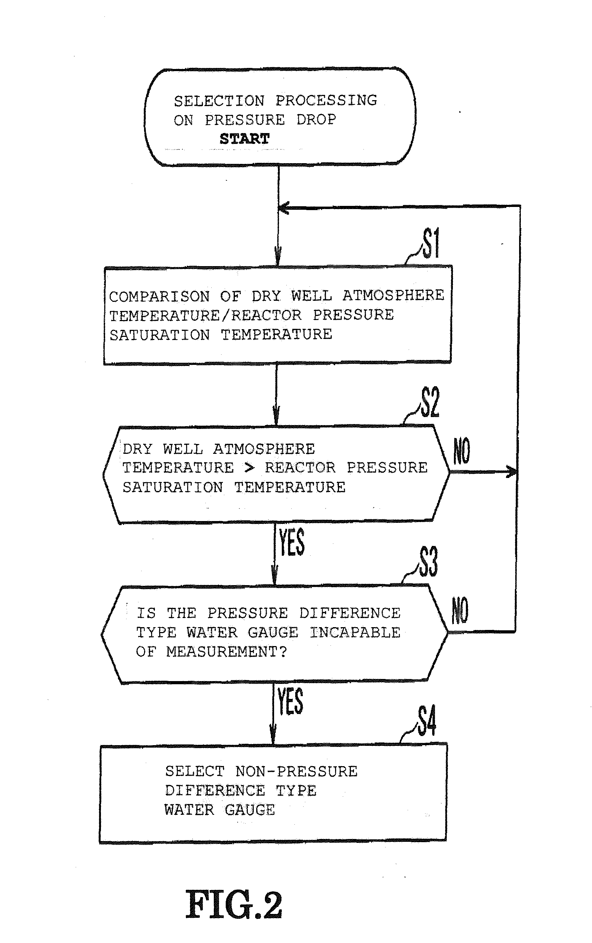

FIG. 2 is a flowchart given in explanation of the selection processing when the reactor pressure drops. This selection processing when the reactor pressure drops is the processing that is planned to take place in the reactor depressurization process in the event of a transient condition or an accident.

In step S1, the computation device 20 acquires and compares the atmosphere temperature of the drywell 5 obtained from the first thermometer 42 and the reactor pressure saturation temperature from the reactor pressure measured by the pressure meter 41. In step S2, the computation device 20 determines whether or not the atmosphere temperature of the drywell 5 is greater than the reactor pressure saturation temperature.

If the atmosphere temperature of the dry well 5 is indeed the greater, there is a risk that the water contained in the reference pipe 21 that is connected with the pressure difference type water gauges 31 to 34 may evaporate. If the computation device 20 finds that the atmosphere temperature of the dry well 5 is the greater, the computation device 20 therefore makes a determination, in step S3, as to whether water level measurement using the pressure difference type water gauges 31 to 34 is possible. For example, the computation device 20 may record the history of the indicated values obtained from the pressure difference water gauges 31 to 34 of a plurality of channels and may detect existence of abnormality from increased variability thereof.

If the computation device 20 concludes that measurement of water level by the pressure difference type water gauges 31 to 34 is not possible, in step S4, it selects at least one of the reactor-internal non-pressure difference type water gauge 35 and reactor-external non-pressure difference type water gauge 36. The computation device 20 subsequently measures the water level at the indicated value of the water level using the non-pressure difference type water gauges 35 and 36 and outputs the result to the operator.

It should be noted that, if, in the temperature comparison step S2 or in step S3 of determining whether or not measurement can be performed, it is found that the reactor pressure saturation temperature is at least the atmosphere temperature of the drywell (NO in step S2) or it is found that measurement can be achieved using the pressure difference type water gauges (NO in step S3), the water level continues to be measured by the pressure difference type water gauges 31 to 34.

With such a water level measurement system 1, even if measurement by the pressure difference type water gauges 31 to 34 is impossible, there is an automatic changeover to the non-pressure difference type water gauges 35, 36 in accordance with the condition of the pressure vessel 2 and the containment vessel 4, so, even in the event of a transient condition or accident condition, the reactor water level can still be measured. In this way, with this water level measurement system 1, the water level can be measured by a water gauge whose reliability can be guaranteed because it is of a different type from the pressure difference type: thus diversity of measurement can be secured.

Next, selection processing in the event of a drop in reactor water level will be described.

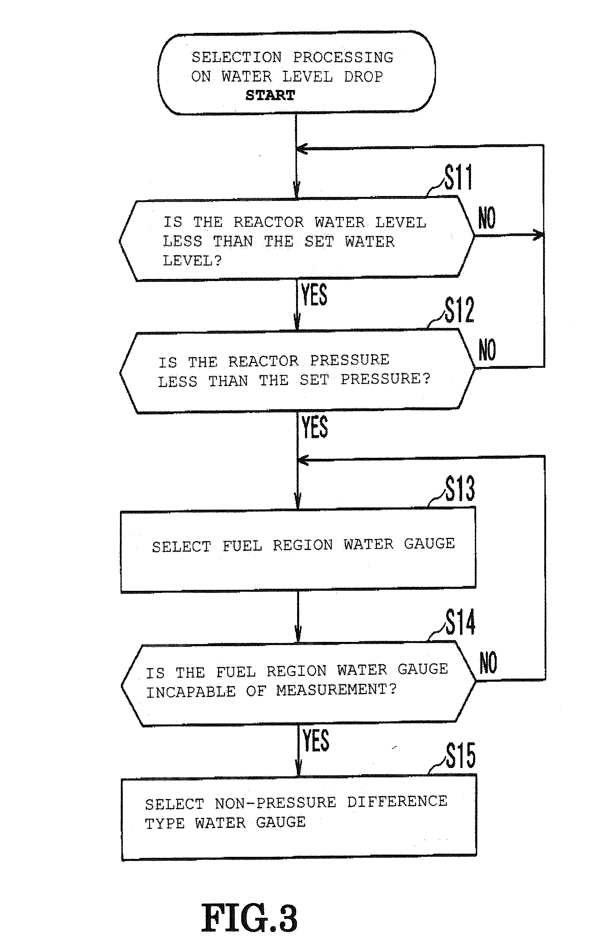

FIG. 3 is a flowchart given in explanation of selection processing in the event of a drop of reactor water level. This selection processing when the reactor water level drops is the processing that is planned to take place in the reactor water level lowering process in the event of a transient condition or an accident.

In step S11, the computation device 20 ascertains whether or not the reactor water level is smaller than the preset water level (for example L-2 or L-1.5). The computation device 20 makes this determination using the indicated value of the wide-zone water gauge 32. If the computation device 20 concludes that the reactor water level is at least the set water level, it then indicates/records the water level, using the currently selected water gauge.

If the computation device 20 concludes that the reactor water level is lower than the set water level, in step S12, it performs a determination to find whether the reactor pressure is smaller than the preset pressure (for example 50 kPa) by comparing this preset pressure with the reactor pressure obtained by the pressure meter 41. If the computation device 20 finds that the reactor pressure is at least the set pressure, it then indicates/records the water level, using the currently selected water gauge.

If the computation device 20 concludes that the reactor pressure is less than the set pressure, in step S13, it selects the fuel zone water gauge 33. In step S14, the computation device 20 determines whether or not water level measurement is possible using the fuel zone water gauge 33. The computation device 20 does this for example by looking for fluctuation of the indicated values of the fuel zone water gauge 33. If the computation device 20 cannot detect such fluctuation, it concludes that measurement is not possible, since there is a risk that abnormality such as evaporation or leakage of the water contained by the reference pipe 21 may have occurred. Also, if the water level is below the minimum measurement range of the fuel zone water gauge 33, the computation device 20 concludes that measurement is not possible.

If the computation device 20 concludes that water level measurement using the fuel zone water gauge 33 is possible, it then indicates/records the water level obtained using the fuel zone water gauge 33. If the computation device 20 concludes that water level measurement using the fuel zone water gauge 33 is not possible, in step S15, it selects at least one of the reactor-internal non-pressure difference type water gauge 35 and reactor-external non-pressure difference type water gauge 36. Subsequently, the computation device 20 indicates/records the water level using the non-pressure difference type water gauges 35, 36.

When a reactor-internal non-pressure difference type water gauge 35 is provided within the core shroud, whereas the fuel zone water gauge 33 measures the water level outside the core shroud, the water level within the core shroud will be measured by the reactor-internal non-pressure difference type water gauge 35. Consequently, if the water level obtained by the reactor-internal non-pressure difference type water gauge 35 is employed as the indicated value, it is desirable that the computation device 20 should output this together with a message to the effect that this is the water level within the core shroud. The operator can thus easily ascertain the fact that the monitored region has been altered, by checking whether the water level indicated value is inside the core shroud or outside the core shroud.

Also, if a plurality of reactor-internal non-pressure difference type water gauges 35 are installed in the core shroud, if abnormality is detected in any of the reactor-internal non-pressure difference type water gauges 35, the computation device 20 indicates/records the water level in the pressure vessel 2 using the detection results of a water gauge other than the water gauge in which abnormality has been detected. In this way, the water level measurement system 1 can confirm that reactor water is present at the location of installation of the normal reactor-internal non-pressure difference type water gauge 35.

With such a water level measurement system 1, if the reactor water level and reactor pressure are less than the set water level and set pressure, the fuel zone water gauge 33 is selected, which was calibrated at atmospheric pressure, representing abnormal transient conditions or the condition in the event of an accident. In this way, the fuel measurement system 1 can accurately monitor the TAF (top of active fuel) water level, while satisfactorily excluding the effect of differences in indication produced by reactor pressure.

Also, in the case where measurement of water level by the fuel zone water gauge 33 is not possible, the water level measurement system 1 can guarantee reliability of indication of reactor water level by selecting the non-pressure difference type water gauges 35, 36. Specifically, the reactor-internal non-pressure difference type water gauge 35 and reactor-external non-pressure difference type water gauge 36 are constituted so as to be capable of detecting the water level below the lower limit of the measurement range of the fuel zone water gauge 33, so the measurement range can be expanded even when, in the event of a transient condition or accident, the reactor water level drops below the lower limit of the measurement range of the fuel zone water gauge 33; in this way that the water level can easily be confirmed.

Next, selection processing in the case where the water level drops below the TAF will be described.

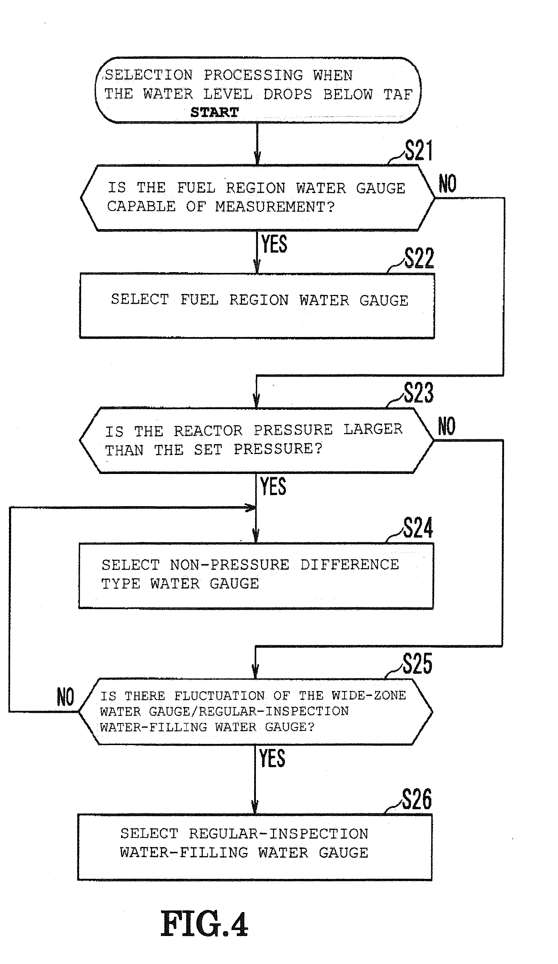

FIG. 4 is a flowchart given in explanation of selection processing in the case where the water level drops below the TAF. This selection processing when the water level drops below the TAF is the processing that is planned to take place when reflooding of the core 3 is to be confirmed after selection processing for example when the water level drops in FIG. 3.

When, as a result of fall of the reactor water level in the case of transient conditions or in the event of an accident, the computation device 20 detects that the water level has fallen below the TAF, in step S21, the computation device 20 determines whether or not measurement of the water level using the fuel zone water gauge 33 is possible. Specifically, the computation device 20 performs a determination as to whether or not water level measurement by the fuel zone water gauge 33 is possible, as a result of performance of water filling by the reference pipe 21 and fluctuation pipe 24 that are connected with the fuel zone water gauge 33.

If the computation device 20 concludes that water level measurement by the fuel zone water gauge 33 is possible, in step S22, it selects the fuel zone water gauge 33 and employs this for indication/recording of water level. Thus the computation device 20 can confirm reflooding of the core 3 by the water level outside the core shroud, which is the water level obtained from the fuel zone water gauge 33.

On the other hand, if the computation device 20 concludes that water level measurement by the fuel zone water gauge 33 is not possible, i.e. that filling of the reference pipe 21 and fluctuation pipe 24 has not been achieved, so that the reliability of the fuel zone water gauge 33 is low, in step S23, the computation device 20 determines whether the reactor pressure is or is not larger than the set pressure (for example 50 kPa).

If the computation device 20 concludes that the reactor pressure is larger than the set pressure, in step S24 the computation device 20 selects at least one of the reactor-internal non-pressure difference type water gauge 35 and the reactor-external non-pressure difference type water gauge 36. The computation device 20 measures the water level using the non-pressure difference type water gauges 35, 36 and subsequently outputs the indicated value of the water level to the operator. Thus, by using the output of the non-pressure difference type water gauges 35, 36, the computation device 20 confirms reflooding of the core 3.

On the other hand, if the computation device 20 concludes, in the pressure evaluation step S23, that the reactor pressure is below the set pressure, in step S25, the computation device 20 records the history of the wide-zone water gauge 32 and the water gauge 34 for water-filling on regular inspection, and determines whether there is any fluctuation in the output.

If the computation device 20 identifies fluctuation in the output of the wide-zone water gauge 32 and water gauge 34 for water-filling on regular inspection, in step S26, the computation device 20 selects the water gauge 34 for water-filling on regular inspection, and indicates/records the water level obtained from this water gauge 34, and thereby confirms reflooding of the core 3. The reason why this confirmation can be obtained is that the effect of reactor pressure on the water gauge 34 for water-filling on regular inspection, which is calibrated under atmospheric pressure, can be satisfactorily excluded, so the reading of the water gauge 34 for water-filling on regular inspection can be used to confirm water filling of the fluctuation pipe 23 by reactor water.

Thus, with such a water level measurement system 1, confirmation of the water level can easily be obtained, since the computation device 20 can suitably select one or other of the fuel zone water gauge 33, non-pressure difference type water gauges 35, 36 or water gauge 34 for water-filling on regular inspection, in accordance with their condition, to perform water level measurement during reflooding of the core 3.

In a water level measurement system 1 according to a first embodiment, there are provided a plurality of water gauges of different construction and, by selection processing in accordance with FIG. 2 to FIG. 4 as described above, in accordance with various conditions such as reactor pressure or reactor water level, a water gauge that is optimal for water level measurement can be selected in a manner whereby diversity is ensured. As a result, with this water level measurement system 1, water level indicated values of high reliability can be presented, making it possible for the operator to easily confirm the water level.

By making use of the benefits of the pressure difference type water gauges 31 to 34 and non-pressure difference type water gauges 35, 36, the water level measurement system 1 can be employed as follows.

When liquids of specific gravity different from that of water (such as for example seawater or boric acid solution) are introduced into the pressure vessel 2, the densities of the water and the liquid other than water are different. The values indicated by the pressure difference type water gauges 31 to 34, which are calibrated in terms of the specific gravity of water, are thereby affected.

In contrast, in the case of the water level measurement system 1, the pressure difference type water gauges 31 to 34 can be calibrated using the non-pressure difference type water gauges 35, 36, which measure water level by a system utilizing for example gamma rays, which are not affected by the specific gravity of the liquid.

The computation device 20 finds the coefficient between these two by comparing the output of the pressure difference type water gauges 31 to 34 and the output of the non-pressure difference type water gauges 35, 36 (water level outside the core shroud). The computation device 20 calibrates the output of the pressure difference type water gauges 31 to 34 using this coefficient. In this way, the computation device 20 can confirm the water level indicated values after calibration from the pressure difference type water gauges 31 to 34, and so can measure the water level outside the core shroud more accurately.

Also, by employing water gauges of a plurality of different types (such as for example using gamma rays, a neutron beam or ultrasonic waves) as the non-pressure difference type water gauges 35, 36 constituting the second water gauges and/or by providing the non-pressure difference type water gauges 35, 36 in multiple zones, diversity of measurement can be secured.

For example, when the indicated values of water level obtained from the non-pressure difference type water gauges 35, 36 are over-scale or down-scale numerical values, the computation device 20 can select non-pressure difference type water gauges 35, 36 other than the non-pressure difference type water gauges 35, 36 that gave these over-scale or down-scale values.

Also, the computation device 20 may record the respective histories and computes the variability of the indicated values between the various zones. In cases where this variability has increased i.e. in which abnormality has been detected, the computation device 20 may select non-pressure difference type water gauges 35, 36 (normal non-pressure difference type water gauge 35, 36) other than the non-pressure difference type water gauge 35, 36 which showed abnormal values.

In this way, the water level measurement system 1 can indicate/record water level with greater accuracy.

### [Second embodiment]

The aspect in which the water level measurement system 51 according to the second embodiment differs from the first embodiment is that it is provided with a water gauge 55 for measurement in the case of a severe accident, instead of the non-pressure difference type water gauges 35, 36 or in addition to the non-pressure difference type water gauges 35, 36. The water gauge 55 for measurement in the event of a severe accident (SA= Severe Accident) is a water gauge capable of detecting water levels that are lower than the bottom end of the fuel active region, which is the lower limit of the measurable range of the fuel zone water gauge 33, down as far as the bottom of the pressure vessel 2.

Other details regarding calibration are the same as in the case of the first embodiment; construction and portions corresponding to those of the first embodiment are given the same reference symbols, or are omitted from the drawings, to avoid repeated description.

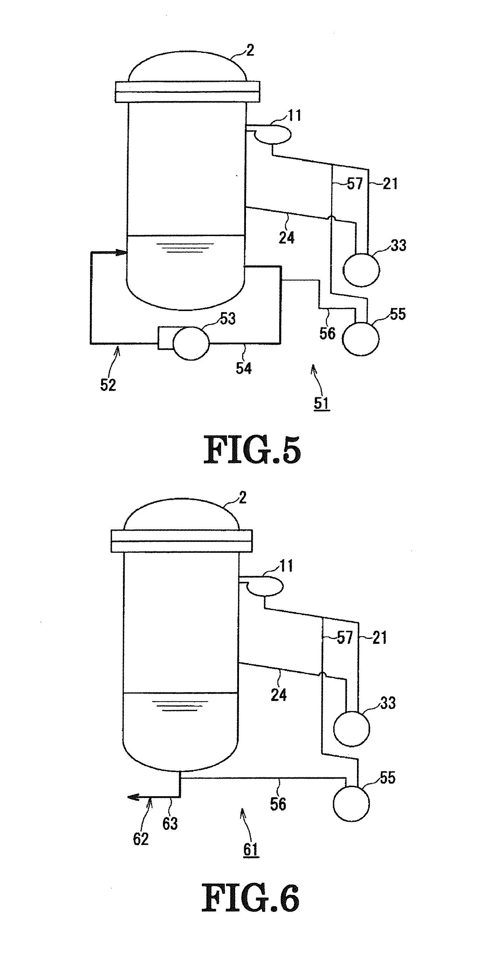

FIG. 5 is a layout diagram showing a second embodiment of the reactor water level measurement system according to the present invention.

The pressure vessel 2 is connected with a reactor coolant recirculation flow rate system (recirculation flow rate system) 52. This recirculation flow rate system 52 comprises: a reactor coolant recirculation flow rate system pump (recirculation flow rate system pump) 53, and a reactor coolant recirculation flow rate system pipe (recirculation flow rate system pipe) 54 that is connected with the upstream side of this recirculation flow rate system pump 53.

The water level measurement system 51 comprises an SA-measurement fluctuating water column instrumentation pipe (fluctuation pipe for SA use) 56, an SA-measurement reference water column instrumentation pipe (reference pipe for SA use) 57, and an SA-measurement water gauge (water gauge for SA use) 55.

A fluctuation pipe 56 for SA use (second fluctuating water column instrumentation pipe) has one end thereof connected with the recirculation flow rate system pipe 54.

The reference pipe 57 for SA use has one end thereof connected with the reference pipe 21. The water gauge 55 for SA use is respectively connected with the other ends of the fluctuation pipe 56 for SA use and the reference pipe 57 for SA use (reference water column instrumentation pipe), so as to detect the water head difference between the fluctuation pipe 56 for SA use and the reference pipe 57 for SA use. The water gauge 55 for SA use is an example of such a second water gauge having a different construction from that of the first water gauge constituted by the pressure difference type water gauges 31 to 34. The water gauge 55 for SA use is connected with the computation device 20, although not shown, so as to deliver detection output to the computation device 20.

As described above, the water gauge 55 for SA use is a water gauge that is capable of detecting water levels below the lower limit of the range that is measurable by the fuel zone water gauge 33. It can therefore be used for measuring the water level of the pressure vessel 2 in place of the non-pressure difference type water gauges 35, 36 or together with the non-pressure difference type water gauges 35, 36 in the first embodiment. Specifically, for example in the selection processing in FIG. 2 to FIG. 4, the water gauge 55 for SA use can be selected in place of the non-pressure difference type water gauges 35, 36 or together with the non-pressure difference type water gauges 35, 36.

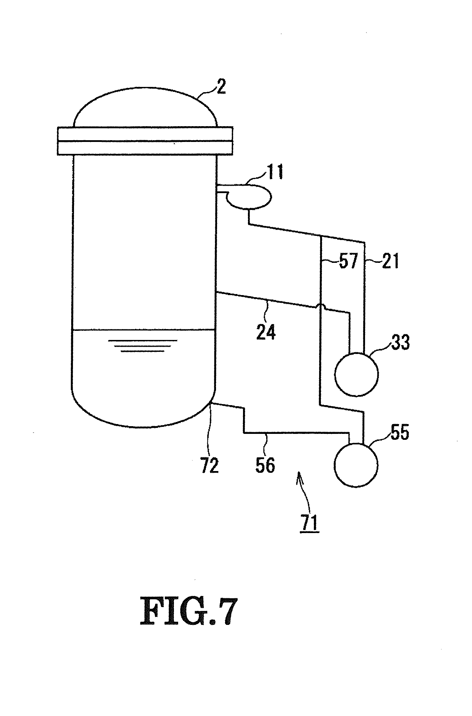

The water gauge 55 for SA use may also be constructed as shown in FIG. 6 and FIG. 7.

FIG. 6 is a layout diagram of a water level measurement system 61 constituting a first modification of the water level measurement system 51 of the second embodiment.

The pressure vessel 2 has a reactor coolant cleaning system (CUW = Clean Up Water) 62 connected therewith. This CUW62 is provided with a reactor coolant cleaning system bottom-line pipe (CUW bottom-line pipe) 63.

The water level measurement system 61 comprises the fluctuation pipe 56 for SA use, the reference pipe 57 for SA use, and the water gauge 55 for SA use.

One end of the fluctuation pipe 56 for SA use (third fluctuating water column instrumentation pipe) is connected with the CUW bottom-line pipe 63. One end of the reference pipe 57 for SA use is connected with the reference pipe 21. The water gauge 55 for SA use is respectively connected with the other ends of the fluctuation pipe 56 for SA use and the reference pipe 57 for SA use, so as to detect the water head difference of the fluctuation pipe 56 for SA use and the reference pipe 57 for SA use.

FIG. 7 is a layout diagram of a water level measurement system 71 constituting a second modified example of the water level measurement system 51.

The pressure vessel 2 is provided with a detection tap 72. This detection tap 72 is provided at a position such that the water gauge 55 for SA use can detect water levels lower than the bottom end of the fuel active zone, down to the bottom of the pressure vessel 2.

The water level measurement system 71 comprises the fluctuation pipe 56 for SA use, the reference pipe 57 for SA use, and the water gauge 55 for SA use.

One end of the fluctuation pipe 56 for SA use (fourth fluctuating water column instrumentation pipe) is connected with the detection tap 72. One end of the reference pipe 57 for SA use is connected with the reference pipe 21. The water gauge 55 for SA use is respectively connected with the other ends of the fluctuation pipe 56 for SA use and the reference pipe 57 for SA use, so that it can detect the water head difference of the fluctuation pipe 56 for SA use and the reference pipe 57 for SA use.

Regarding the water level measurement systems 51, 61, 71 shown in FIG. 5 to FIG. 7 above, the water level measurement system 51 etc. present the same beneficial effect as the first embodiment and, in addition, make it possible to perform measurement with respect to a region that cannot be measured by the water level measurement system 1 of the first embodiment: thus these systems uniformly make possible expansion of the measurement range by a pressure difference measurement system.

While various embodiments of the present invention have been described, these embodiments are presented merely by way of example and are not intended to restrict the scope of the invention. Novel embodiments thereof could be implemented in various modes, without departing from the gist of the invention, and various omissions, substitutions or modifications could be made. Such embodiments or modifications thereof are included in the scope or gist of the invention and are included in the invention set out in the patent claims and equivalents thereof.

For example, while in regard to the various selection processes shown in FIG. 2 to FIG. 4, examples were described that were automatically performed by the computation device 20, it would also be possible for these selections to be performed manually by the operator. In this case, the computation device 20 may display on the display device various types of information such as the condition of the pressure vessel 2 or containment vessel 4, for purposes of selection of a water gauge, to prompt the operator to select a water gauge. Also, the computation device 20 may cause the results of the selection by the operator to be indicated through the input device.

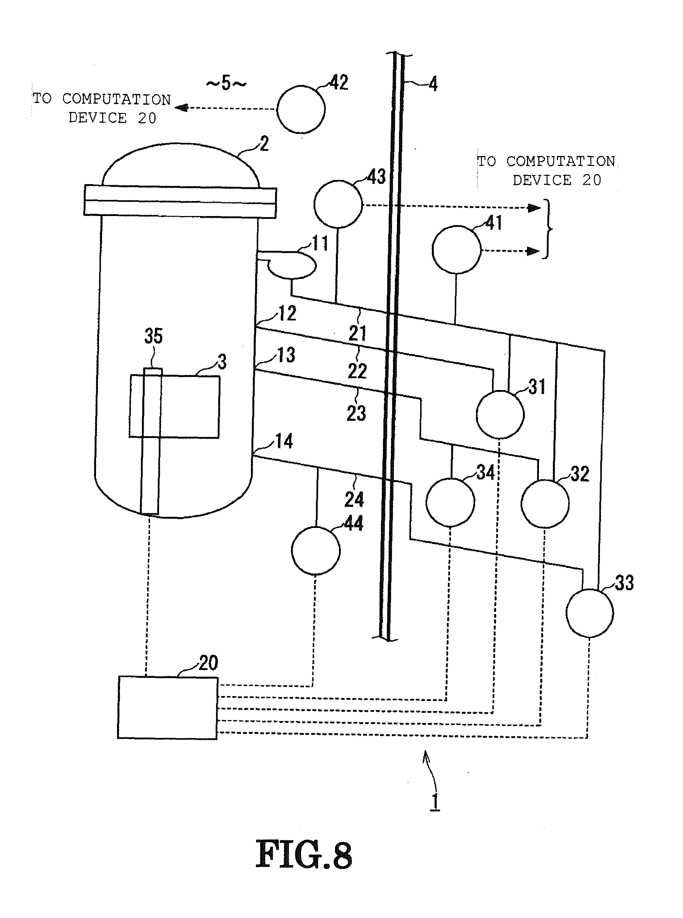

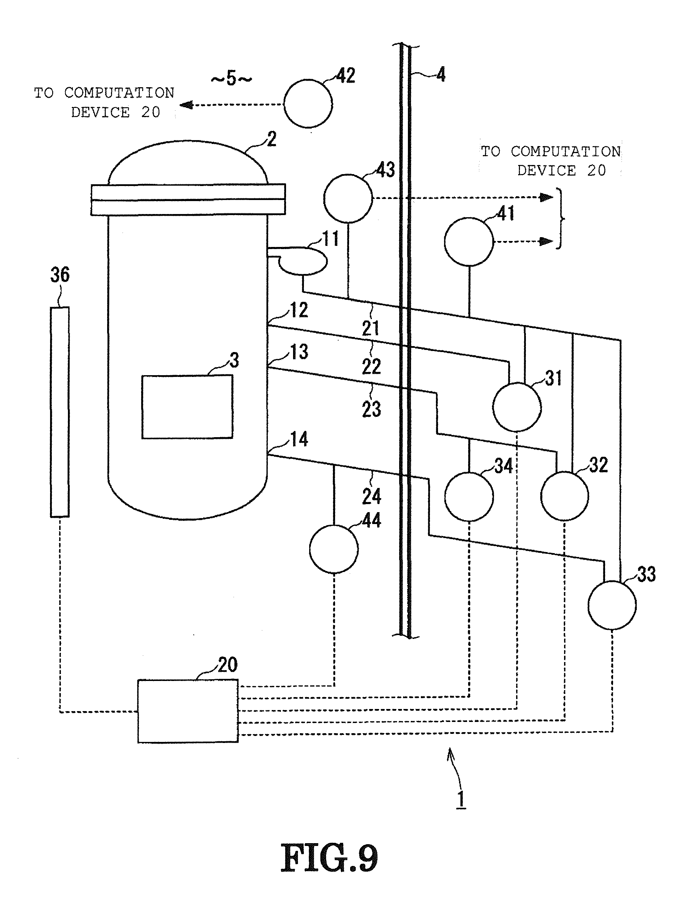

Also, while, for the water level measurement system in the first and second embodiments, the description was given taking the case of the provision of both the reactor-internal non-pressure difference type water gauge 35 and the reactor-external non-pressure difference type water gauge 36 as an example of use of a non-pressure difference type water gauge, as shown in FIG. 8 and FIG. 9, it would alternatively be possible to provide either one of a reactor-internal non-pressure difference type water gauge 35, or a reactor-external non-pressure difference type water gauge 36.

### POSSIBILITIES OF INDUSTRIAL APPLICATION

The present invention can be applied to water level measurement systems of all reactors of the type in which the reactor is cooled by water.

## Claims

1. A reactor water level measurement system comprising:
a condensation tank connected with a steam region of a reactor pressure vessel contained in a reactor containment vessel;
a reference water column instrumentation pipe whereof one end is connected with said condensation tank;
a first fluctuating water column instrumentation pipe whereof one end is connected with said reactor pressure vessel;
a pressure difference measurement type first water gauge that detects a water head difference of said reference water column instrumentation pipe and said first fluctuating water column instrumentation pipe and that is connected with the other ends of said reference water column instrumentation pipe and said first fluctuating water column instrumentation pipe;
a second water gauge having a different construction from said first water gauge and that detects a water level of said reactor pressure vessel; and
a computation device that selects said first water gauge or said second water gauge in accordance with a condition of said reactor containment vessel or said reactor pressure vessel and that indicates/records a water level of said reactor pressure vessel based on a detection result of a selected water gauge.

2. The reactor water level measurement system according to claim 1,
wherein said second water gauge is arranged inside said reactor pressure vessel or outside said reactor pressure vessel and detects a water level of said reactor pressure vessel by a different system than said pressure difference system.

3. The reactor water level measurement system according to claim 1 or 2,
wherein said first water gauge comprises:
a narrow-zone water gauge that measures a water level in a narrow range of water level fluctuation;
a wide-zone water gauge that measures a water level in a range that is wider than a measurement range of said narrow-zone water gauge; and
a fuel zone water gauge that measures water levels that are lower than a measurement range of said wide-zone water gauge; and
a periodic-inspection water-filling water gauge that measures a planned water level of periodic inspection,
wherein said second water gauge has a range of measurement of water level of said reactor pressure vessel that is lower than a measurement range of said fuel region water gauge.

4. The reactor water level measurement system according to claim 1 or 2,
wherein said computation device acquires an atmosphere temperature of a dry well of said reactor containment vessel and a saturation temperature of a reactor pressure, and, if said atmosphere temperature of said dry well is greater than said saturation temperature of said reactor pressure , selects said second water gauge.

5. The reactor water level measurement system according to claim 3,
wherein if a water level detected by said wide-zone water gauge is smaller than a set water level and said reactor pressure is smaller than a set pressure, said computation device selects said fuel region water gauge, and, furthermore, if said fuel region water gauge is incapable of measurement, selects said second water gauge.

6. The reactor water level measurement system according to claim 5,
wherein said computation device selects said second water gauge if said water level is below a lower limit of a measurement range of said fuel region water gauge.

7. The reactor water level measurement system according to claim 5,
wherein when water-filling of said reference water column instrumentation pipe and said fluctuating water column instrumentation pipe is performed and said fuel region water gauge has become capable of measurement, said computation device selects said fuel region water gauge.

8. The reactor water level measurement system according to claim 5,
wherein when water-filling of said reference water column instrumentation pipe and said fluctuating water column instrumentation pipe is not performed and said reactor pressure is greater than said set pressure, said computation device selects said second water gauge.

9. The reactor water level measurement system according to claim 5,
wherein when water-filling of said reference water column instrumentation pipe and said fluctuating water column instrumentation pipe is not performed, if said reactor pressure is less than said set pressure, and fluctuation of outputs of said wide-zone water gauge and periodic-inspection water-filling water gauge is detected, said computation device selects said periodic-inspection water-filling water gauge.

10. The reactor water level measurement system according to claim 1, further comprising:
a reactor coolant recirculation flow rate system pipe connected with said reactor pressure vessel; and
a second fluctuating water column instrumentation pipe whereof one end is connected with said reactor coolant recirculation flow rate system pipe,
wherein said second water gauge is connected with the other ends of said reference water column instrumentation pipe and said second fluctuating water column instrumentation pipe, so that said second water gauge constitutes a pressure difference type water gauge that detects a water head difference of said reference water column instrumentation pipe and said second fluctuating water column instrumentation pipe.

11. The reactor water level measurement system according to claim 1, further comprising:
a reactor coolant cleaning system pipe connected with said reactor pressure vessel; and
a third fluctuating water column instrumentation pipe whereof one end is connected with said reactor coolant cleaning system pipe, and
wherein said second water gauge is connected with the other ends of said reference water column instrumentation pipe and said third fluctuating water column instrumentation pipe, so that said second water gauge constitutes a pressure difference type water gauge that detects a water head difference of said reference water column instrumentation pipe and said third fluctuating water column instrumentation pipe.

12. The reactor water level measurement system according to claim 1, further comprising:
a fourth fluctuating water column instrumentation pipe whereof one end is connected with a position within said reactor pressure vessel where water levels below a bottom end of a fuel active region can be detected; and
said second water gauge is connected with the other ends of said reference water column instrumentation pipe and said fourth fluctuating water column instrumentation pipe, so that said second water gauge constitutes a pressure difference type water gauge that detects a water head difference of said reference water column instrumentation pipe and said fourth fluctuating water column instrumentation pipe.

13. The reactor water level measurement system according to any of claim 1 to claim 3,
wherein said second water gauge is a water gauge that is arranged within a core shroud of said reactor pressure vessel, and together with said water level, said computation device outputs a message to the effect that a water level that is output derived from said second water gauge that has been selected is a water level within said core shroud.

14. The reactor water level measurement system according to any of claim 1 to claim 3,
wherein measurement ranges of said first water gauge and said second water gauge overlap, and
said computation device compares said first water level and water level of said reactor pressure vessel that was found by a detected value of said second water gauge, and, if these two water levels are different, finds a coefficient between said first water gauge and said second water gauge and calibrates a detection value of said first water gauge based on said coefficient.

15. The reactor water level measurement system according to any of claim 1 to claim 3,
wherein said second water gauge is constituted by a plurality of water gauges that measure water levels by different systems, and if, of the detection values obtained from said plurality of second water gauges, a numerical value is over-scale or down-scale, said computation device selects a water gauge other than a water gauge that detected said over-scale or down-scale numerical value.

16. The reactor water level measurement system according to any of claim 1 to claim 3,
wherein said second water gauge is constituted by a plurality of water gauges that are provided in multiple zones and that measure water level by different systems, and
said computation device calculates a variability of indicated values between zones and, if variability has increased, selects a water gauge other than said second water gauge that is showing abnormal values.

17. The reactor water level measurement system according to any of claim 1 to claim 3,
wherein said second water gauges are installed at a plurality of locations within said core shroud, and if abnormality is detected by any of said second water gauges, said computation device indicates/records a water level of said reactor pressure vessel based on a detection result of a water gauge other than said second water gauge whereby abnormality was detected.
